(19)

Europäisches Patentamt

European Patent Office

Office européen des brevets

(11) **EP 3 010 263 A1**

(12) **EUROPEAN PATENT APPLICATION**

(43) Date of publication:
20.04.2016 Bulletin 2016/16

(51) Int Cl.:
*H04W 12/02* (2009.01)    *H04W 12/04* (2009.01)

(21) Application number: 14306612.4

(22) Date of filing: 13.10.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: GEMALTO SA
92190 Meudon (FR)

(72) Inventors:
• **Amiel, Patrick**
13881 GEMENOS CEDEX (FR)
• **Pico, Richard**
13881 GEMENOS CEDEX (FR)

• **Berard, Xavier**
13881 GEMENOS CEDEX (FR)
• **Roussel, Nicolas**
13881 GEMENOS CEDEX (FR)
• **Gonzalvo, Benoit**
13881 GEMENOS CEDEX (FR)
• **Paillart, Frédéric**
13881 GEMENOS CEDEX (FR)
• **Faure, Frédéric**
13881 GEMENOS CEDEX (FR)
• **Duprez, Jérôme**
13881 GEMENOS CEDEX (FR)
• **Labourie, Florent**
13881 GEMENOS CEDEX (FR)

(54) **Method for downloading subscriptions in secure elements and for packaging subscriptions to be downloaded later into secure elements**

(57)     The invention concerns a method for downloading subscriptions in secure elements (10), each secure element (10) cooperating with a telecommunication terminal.

According to the invention, the method consists in:
a- Ciphering at the level of a manufacturer unit of the secure element, the subscriptions with a manufacturer key and a unique first AID;
b- Transferring the ciphered subscriptions to a Subscription Manager Data Preparation unit (SM-DP) along with the manufacturer key and the unique first AID;
c- At the occurrence of a request for downloading one of these subscriptions in one secure element, generating a second AID by a Subscription Manager Secure Routing unit (SM-SR) in order to be able to address the content of the subscription later on through the second AID.
d- Transmitting one ciphered subscription to this secure element (10), along with the manufacturer key and the unique first AID;
e- Deciphering in the secure element (10) the subscription with the manufacturer key and the first unique AID and installing the subscription in the secure element (10).

Fig. 1

**Description**

The present invention is related to telecommunications and in particular to remote personalization of secure elements cooperating with telecommunication terminals.

These telecommunication terminals can be for example mobile phones, tablets, smartphones or machines. The secure elements are typically Sim cards, SD cards, removable UICCs or embedded UICCs (also called eUICCs). Embedded UICCs are UICCs that are not removable from terminals or not easily removable there from.

The technical specification "Remote Provisioning Architecture for Embedded UICC", version 1.0 dated December 17, 2013 from the GSMA defines a technical solution for the remote provisioning and management of Embedded UICC in machine-to-machine devices which are not easily reachable. The adoption of this technical solution aims to provide the basis for ensuring global interoperability between potentially different MNO (Mobile Network Operator) deployment scenarios, different makers of network elements (e.g. SM-DP, SM-SR) and different providers of eUICC elements. SM-DP stands for Subscriber Manager Data Preparation and SM-SR for Subscriber Manager Secure Routing.

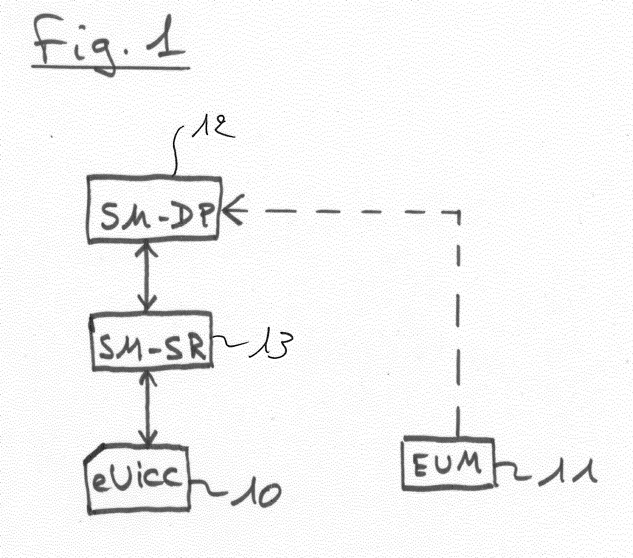

Figure 1 shows a global system for remote provisioning secure elements.

The secure elements are here eUICCs. Only one eUICC 10 is represented. The eUICC 10 has been manufactured by a EUM (eUICC Manufacturer) 11 and cooperates with a telecommunication terminal not represented. A subscription can be downloaded over the air in the eUICC 10 through a third party owning a SM-DP 12, typically a MNO, and a SM-SR 13 that could belong to the same party or to another party.

The SM-DP 12 acts as a subscription issuer and provides the subscription scripts to be executed on a dedicated Security Domain (called the "targeted SD") in the eUICC 10. At the generation of this script, neither the eUICC on which the script shall be executed, nor the AID (Application Identifier) of the targeted SD is known.

The SM-SR 13 ensures a transport layer and has the responsibility to perform content management actions on the eUICC 10, on behalf of the SM-DP 12, i.e. first creates the targeted SD, and then downloads the subscription script on this targeted SD.

The SM-DP 12 receives from the EUM 11 some data (executable or not), permitting to provide the eUICC 10 with a full subscription. In addition, the SM-DP 12 completes EUM data with operator's data, applications, keys, the couple IMSI/Ki, a file system,... according to MNO's specifications.

The problem to solve is to enable the SM-DP 12 to generate subscription scripts by taking in account the following points:

- Without knowing the targeted secure element

- Without knowing the AID of the to-be-created Security Domain (in GSMA specifications, this may be freely chosen by the SM-SR)

so that this script could be executed by the SM-DP 12 on any UICC, whatever the targeted SD AID. The secure element 10 is able to support several subscriptions and only one subscription will be active at the same time on this secure element.

This problem is new since over the air management of secure elements has not been done yet in an effective way. Up to now, instantiation of Application or Security Domain was mainly done in factory, during personalization of the secure element. Since the emerging OTA (Over The Air) application management of UICC is becoming a reality, Application and Security Domain OTA instantiation is a key step.

A first solution would be that the Subscription Issuer (SM-DP 12) defines a fixed value for the AID of the targeted SD. Then, he might prepare its script according to this AID value and send it to the Subscription Manager (SM-SR 13).

The problem of this solution is that it is not possible, on the same secure element, to have two or more subscriptions provided by the same Subscription Issuer (because each of them would use this fixed value, breaking the AID uniqueness rule defined by Global Platform).

A second solution to work around this problem is that the Subscription Issuer might self generate one unique AID per subscription. For example, he might generate the targeted SD AID based on the IMSI value.

If so, the Subscription Issuer shall generate one full diversified script per subscription (meaning 100 millions of scripts to match 100 millions of subscriptions).

This is however contradictory with the with current data preparation optimizations: As the major part of the script (around 100KB) is common to all cards (RFM profile...) and only a small sensitive part (less than 20KB) is specific to each subscription, data preparation is only computing the common part once, and computes as many diversified data as required.

The diversification of the full script would:

- Generate performance issues on the data preparation centre,
- Generate extra network bandwidth in order to send the full scripts from the Subscription Issuer 12 to the Subscription Manager 13 (whereas the common part can be sent only once if not diversified),
- would require a huge storage area on both systems (whereas the common part can be stored only once if not diversified).

This solution, even if technically possible, is not suitable to real-time server availability required by the market.

A third solution is that the Subscription Issuer generates the script only when the Subscription Manager has determined the targeted secure element and has determined the targeted SD AID.

The issue of this solution is that the process is a dynamic process where the Subscription Issuer needs to wait for actions of the Subscription Manager: This is not compliant with the existing process.

Moreover, all three alternatives above do not address the GSMA-compliant case, where the SM-SR chooses the AID of the SD that will host the subscription, and the SM-DP provides the subscription script.

By working dynamically, the EUM has in some cases to disclose to the SM-DP owner how they generate a profile (if the profile is not secured). This is not convenient since the SM-DP owner has therefore access to the APDUs of the EUM. This generates also a huge workload for the SM-DP server since it is working in real-time. This problem remains even if the EUM sends to the SM-DP personalized profiles (profiles that do not need to be completed by the SM-DP owner).

A solution to this problem would be to send, from the EUM to the SM-DP secured personalized profiles. This means that each profile would be protected (encrypted) by a key only known by the EUM. This key is hereafter noted Keum. The SM-DP would receive a plurality of personalized profiles in a batch mode (no more on demand, no dynamic personalization of the secure elements), each profile being protected by the same key Keum also present in the UICCs to be personalized (in case of use of secret keys). The SM-DP would then receive a plurality of:

$$[\text{personalized profiles}]_{\text{Keum}}$$

from EUM and store them for transmitting them later on to the UICCs to be personalized. This does however not fit with interoperability of profiles downloading since the SM-DP could not download subscriptions (or subscription profiles) to any secure element without knowing the Keum of its manufacturer.

The invention proposes to allocate an AID when instantiating an Application, or later in the Application's lifecycle, in a multi-applicative Global Platform-compliant (U)SIM cards, and subsequently, to the usage of this AID to communicate with this Application.

According to the GSMA specification mentioned previously, a Kscp03 key is defined during a SCP03 key establishment procedure called ISD-P key establishment. The personalized profile is secured by this SCP03 key.

If the profile (subscription) to be loaded in the secure element is protected by a manufacturer key Keum, the SM-DP would, during the personalization phase, send [Keum]$_{\text{Kscp03}}$ to the secure element to be personalized, before sending [personalized profile]$_{\text{Keum}}$ to this UICC. This would ensure the confidentiality of the profiles prepared by the EUM.

However, this solution has a drawback: The SM-SR has to decide the AID (Application Identifier) in which the profile has to be loaded. The SM-SR can be provided by many manufacturers. It can be an OEM, a service provider, another card manufacturer... The AID must be known in advance, at the level of the personalization of the profiles (by the EUM) since it enters in the computation of cryptograms used in the secure element 10. The AID is a diversification factor that has to be known by the SM-SR and since the profiles (subscriptions) are pre-computed at the level of the EUM, there is no possibility to create a SD without knowing this AID.

So, the main problem when downloading a subscription to a secure element is that the AID is not known since the security domain (SD) is not created. A Security Domain is a protected area on a UICC. To this Security Domain are assigned applications, which can use cryptographic services it offers. By default, for secure elements personalized in a factory, only the Security Domain of the card issuer exists on secure element. If another institution wants to have its own Security Domain, e.g. for having its own secure application environment or managing its own applications, such a domain can be created with the help of the secure element issuer. But this is not the case for secure elements that have to be personalized over the air.

Moreover, the number of profiles already existing in a given secure element is not known by the SM-DP.

The invention proposes a solution to this problem.

The invention takes place in an environment where the personalized profiles are handled in a batch mode, i.e. generated in a non-connected mode (the SM-SR does not address the secure elements). The SM-DP stores a plurality of personalized profiles (corresponding to subscriptions), these personalized profiles being ready to be loaded on the UICCs on demand. Non-connected mode means that the SM-DP generates profiles ready to be loaded on UICCs without being connected to these UICCs (there is no creation of ISD-P procedure, no establishment of Kscp03 keys,...). The SM-DP stores these profiles (there can be millions) ready to be downloaded on UICCs. For that, the EUM sends to the SM-DP the personalized profiles for his UICCs.

In order to solve the problem of the AID that is to be used for personalizing a secure element, the invention proposes a method for downloading subscriptions in secure elements, each secure element cooperating with a telecommunication terminal, the method consisting in:

a- Ciphering at the level of a manufacturer unit of the secure element, these subscriptions with a manufacturer key and a unique first AID;

b- Transferring the ciphered subscriptions to a Subscription Manager Data Preparation unit (SM-DP) along with the manufacturer key and the unique first AID;

c- At the occurrence of a request for downloading one of these subscriptions in a secure element, generating a second AID by a Subscription Manager Secure Routing unit (SM-SR) in order to be able to address the content of the subscription later on through this second AID.

d- Transmitting a ciphered subscription to the secure element, along with the manufacturer key and the unique first AID;

e- Deciphering in the secure element the subscription with the manufacturer key and the first unique AID and installing the subscription in the secure element.

The invention also concerns a method for packaging subscriptions to be downloaded later on into secure elements, this method consisting in:

a- Ciphering at the level of a manufacturer of the secure elements, subscriptions with a manufacturer key and a unique first AID;

b- Transferring these ciphered subscriptions to a Subscription Manager Data Preparation unit (SM-DP) along with the manufacturer key and the unique first AID.

One implementation of the present invention could consist in the following seven steps:

Step 1: A virtual AID, also called first AID or AID1, is chosen by the subscription Issuer (or its representative, SM-DP) as being the identifier of the Security Domain of all subscriptions he would like to manage. This virtual AID is for example a reserved AID like described in the aforementioned specification, at point 4.1.2.1 Policy Rules Update by MNO, page 106.

The subscription issuer 11 can then prepare its scripts using this virtual AID value, and without knowing the targeted secure elements (eUICC preferably). The created subscriptions are then ciphered with this first AID and also optionally with a manufacturer key for confidentiality purposes. This operation permits to obtain a plurality of ciphered subscriptions each noted:

$$[subscription]_{Keum, \, AID1}$$

These ciphered subscriptions are transferred to the SM-DP with the keys Keum and AID1. The Keum key is protected by a transport key protected by a KMS.

Step 2: At the occurrence of a request for downloading one of these subscriptions in a secure element, this request coming from the SM-DP, the UICC (the user of the secure element asks for a new subscription) or from the EUM for example, the SM-DP requests the SM-SR to create the targeted SD (called ISD-P in the GSMA specifications). The SM-SR creates the ISD-P, by executing INSTALL [for install] command. It provides a real AID for this security domain in the INSTALL command. The real AID can be called the second AID. The real AID is transmitted from the SM-SR to the SM-DP.

Step 3: The SM-DP executes (through the connectivity of the SM-SR), the key establishment with this ISD-P, and then shares a private SCP03 key with the ISD-P.

These steps 1, 2 and 3 are fully compliant with the GSMA eUICC Remote Provisioning Architecture mentioned previously.

Step 4: The SM-DP uses the shared SCP03 key, and a pseudo-random based on the real AID, to open an SCP03 channel, and then sets a virtual AID: For this, it executes a STORE-DATA on the ISD-P, with a specific TLV (Tag Length Value).

If the EUM has a virtual AID reserved, it is not necessary to execute the step of executing the step of STORE-DATA and this 4th step can be skipped.

Step 5: the SM-DP uses the shared SP03 key, and a pseudo-random based on the virtual AID, to open a new SCP03 channel.

The UICC operating system is coded such that, if a virtual AID is set on a SD, it uses this in the pseudo-random, and if no virtual AID is set on a SD, it uses the real AID.

The SCP03 script contains PUT-KEY instruction(s) and preferably the Keum pre-generated by the EUM.

Step 6: The SM-DP sends the pre-generated personalization script(s) (subscriptions) to the secure element by using the SM-SR connectivity. The scripts rely on the pre-generated key(s) and pre-generated virtual AID, and the card executes them thanks to the association and mechanism described above. The secure element deciphers the subscription thanks to the manufacturer key Keum and the first AID.

Step 7: the SM-DP removes the temporary keys, and remove the virtual AID. This last point can be performed e.g. by another STORE-DATA, with same tag, and null value.

The invention thus proposes to add a virtual AID to the targeted SD, and to perform on board-association of the virtual and real AIDs.

Form this point, the ISD-P behaves exactly like a regular Global Platform SD.

As the card keeps the Virtual AID <-> True AID association, the SD is addressable by both AIDs. In particular, the SM-SR, which knows only about the real AID, will continue to route the SCP81 flow using X-Admin-Targeted-Application = real AID, while the SM-DP is able to send INSTALL-FOR-PERSO commands that use the virtual AID, and open SCP03 channel using pseudo-randoms based on the virtual AID.

For the SCP03 pseudo-random, the system will also use the virtual AID.

Thanks to the invention, the subscription manager is able to send several subscriptions on the same card, of course only one subscription is active at the same time.

As a variant, the possibility to add a virtual AID could be removed once the SD is in a certain state (e.g. DISABLED), or could be usable only once (and setting a null virtual AID could remove the capability for this SD).

The main advantage of the invention is that off card entities, like an EUM for example, are able to prepare scripts without knowing the SD that will be physically targeted. The virtual AID acts as a kind of alias for the target.

Moreover, if the virtual AID is used for a set of cards, the prepared script can be sent to any of these cards, assuming that the off card entity will provision the good key values for the opening of the secure channels.

The invention enables to prepare offline a batch of scripts (subscriptions) and avoids being obliged to prepare as many scripts as there are SD AIDs and cards on the field.

In a variant, it is possible to diversify the first AID but this does not present a significant advantage. The first AID can also differ in function of the type of the secure elements (a unique AID is dedicated to each type of secure element). It is also possible to dedicate a given AID to each batch of secure elements.

**Claims**

1. Method for downloading subscriptions in secure elements (10), each secure element (10) cooperating with a telecommunication terminal, said method consisting in:

   a- Ciphering at the level of a manufacturer unit of said secure element, said subscriptions with a manufacturer key and a unique first AID;
   b- Transferring said ciphered subscriptions to a Subscription Manager Data Preparation unit (SM-DP) along with said manufacturer key and said unique first AID;
   c- At the occurrence of a request for downloading one of said subscriptions in one of said secure elements, generating a second AID by a Subscription Manager Secure Routing unit (SM-SR) in order to be able to address the content of said subscription later on through said second AID.
   d- Transmitting one of said ciphered subscriptions to said secure element (10), along with said manufacturer key and said unique first AID;
   e- Deciphering in said secure element (10) said subscription with said manufacturer key and said first unique AID and installing said subscription in said secure element (10).

2. Method for packaging subscriptions to be downloaded later on into secure elements, said method consisting in:

   a- Ciphering at the level of a manufacturer of said secure elements, said subscriptions with a manufacturer key and a unique first AID;
   b- Transferring said ciphered subscriptions to a Subscription Manager Data Preparation unit (SM-DP) along with said manufacturer key and said unique first AID.

3. Method according to any of the claims 1 or 2, wherein said secure elements (10) are embedded UICCs.

Fig. 1

Europäisches
Patentamt

European
Patent Office

Office européen
des brevets

# EUROPEAN SEARCH REPORT

**Application Number**

EP 14 30 6612

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| Y | EP 2 448 216 A1 (APPLE INC [US]) 2 May 2012 (2012-05-02) * title; paragraphs [0001], [0034], [0045], [0047], [0049], [0050] * | 1-3 | INV. H04W12/02 H04W12/04 |
| Y | WO 2013/083770 A1 (GEMALTO SA [FR]) 13 June 2013 (2013-06-13) * pages 3,6 * | 1-3 | |
| A | EP 2 388 968 A1 (ZTE CORP [CN]) 23 November 2011 (2011-11-23) * paragraphs [0020], [0037] * | 1-3 | |
| Y,D | Anonymous: "Remote Provisioning Architecture for Embedded UICCTechnical Specification Version 1.0", GSMA , 17 December 2013 (2013-12-17), pages 1-294, XP002734951, Retrieved from the Internet: URL:http://www.gsma.com/connectedliving/wp-content/uploads/2014/01/2.-GSMA-Remote-Provisioning-Architecture-for-Embedded-UICC-Technical-Specification-Version-1.0.pdf [retrieved on 2015-01-26] * pages 18,22 * | 1 | TECHNICAL FIELDS SEARCHED      (IPC) H04W |

The present search report has been drawn up for all claims

| Place of search | Date of completion of the search | Examiner |
|---|---|---|
| Munich | 26 January 2015 | Barla Harter, I |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 6612

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2015

| Patent document cited in search report | | | Publication date | Patent family member(s) | | | Publication date |
|---|---|---|---|---|---|---|---|
| EP 2448216 | A1 | | 02-05-2012 | CN | 102572805 | A | 11-07-2012 |
| | | | | EP | 2448216 | A1 | 02-05-2012 |
| | | | | JP | 5627558 | B2 | 19-11-2014 |
| | | | | JP | 2012095306 | A | 17-05-2012 |
| | | | | JP | 2014241648 | A | 25-12-2014 |
| | | | | KR | 20120044916 | A | 08-05-2012 |
| | | | | RU | 2011144921 | A | 10-05-2013 |
| | | | | TW | 201233203 | A | 01-08-2012 |
| | | | | US | 2012108207 | A1 | 03-05-2012 |
| | | | | US | 2014099925 | A1 | 10-04-2014 |
| | | | | WO | 2012058429 | A2 | 03-05-2012 |
| WO 2013083770 | A1 | | 13-06-2013 | EP | 2602956 | A1 | 12-06-2013 |
| | | | | WO | 2013083770 | A1 | 13-06-2013 |
| EP 2388968 | A1 | | 23-11-2011 | CN | 101820613 | A | 01-09-2010 |
| | | | | EP | 2388968 | A1 | 23-11-2011 |
| | | | | JP | 5513527 | B2 | 04-06-2014 |
| | | | | JP | 2012518350 | A | 09-08-2012 |
| | | | | US | 2011296182 | A1 | 01-12-2011 |
| | | | | WO | 2010096994 | A1 | 02-09-2010 |

EPO FORM P0459

For more details about this annex : see Official Journal of the European Patent Office, No. 12/82

**EP 3 010 263 A1**

**REFERENCES CITED IN THE DESCRIPTION**

**Non-patent literature cited in the description**

- *Remote Provisioning Architecture for Embedded UICC,* 17 December 2013